# EUROPEAN PATENT APPLICATION

(11) **EP 1 895 778 A1**
(43) Date of publication of application: **05.03.2008**
(21) Application number: 07710860.3
(22) Date of filing: 30.01.2007
(51) Int. Cl.: H04N 7/173

(54) **ELECTRONIC PROGRAM GUIDE SERVICE SYSTEM AND ESTABLISHING AND OPERATION METHOD THEREOF**

(30) Priority: 13.03.2006 CN 200610057516
(71) Applicant: Huawei Technologies Co., Ltd., Longgang District, Shenzhen Guangdong 518129 (CN)
(72) Inventor: CHEN, Jun, Guangdong 518129 (CN)
(74) Representative: Collin, Jérôme
(86) International application number: PCT/CN2007/000335
(87) International publication number: WO 2007/104217

(57) **Abstract**

A method for establishing an electronic program guide and corresponding operation method, system and device thereof. The establishing method includes: grouping the electronic program guide servers which have the same processing capacity and the same service processing flow, corresponding an eigenvalue for deciding user properties to the group number of server, forming a scheduling strategy and storing it in the dispatching server. The dispatching server appoints an electronic program guide server for the user terminal after the user terminal promotes dispatching request to the dispatching server. In this way, data flow does not pass metropolitan area network, the influence to the band width of metropolitan area network is reduced, thus the number of user terminal continually can be expanded.

## Description

This application claims the priority of the Chinese patent application No. 200610057516.5 submitted to the Chinese Patent Office on Mar. 13, 2006, titled "Electronic Program Guide Server Deploying System, and Establishing and Operating Method Thereof", the entire content of which is incorporated herein by reference.

### Field of the Invention

The present invention relates to the field of information and communication technology, and in particular to an electronic program guide service system and its establishing and operating method.

### Background of the Invention

In the Internet Protocol TV (IPTV) system, the Electronic Program Guide (EPG) system is the portal through which users may access and enjoy the service. Specifically, users access the EPG server and browse the service information displayed by the EPG by use of a special terminal which is a Set-Top-Box (STB).

Users of the IPTV service, after power on, go through the broadband accessing authentication at first. After the users of the service pass the accessing authentication, their set-top-boxes then initiate a request for logon authentication to the EPG server using their accounts and passwords. If the logon passes authentication, the EPG displays the service information for users to browse and choose. The information displayed by the EPG includes the name, introduction, price for using, links of services, poster pictures, etc. of the contents to be consumed.

The feature of IPTV lies in that users browse the service information and choose what to consume on TV, so that the access hours tend to be comparatively concentrated, which results in a sudden increase of access amount to the EPG and therefore requires an EPG server with relatively high processing performance and ability of extension.

For browsing on TV, the EPG displays information containing abundant pictures in order to improve users' experience. However, current set-top-boxes, in consideration of cost, are unlikely to provide large buffer, so that many picture files have to be downloaded during the process when users are browsing the EPG, which therefore demands for relatively broad transmission bandwidth.

Currently applied deployment solution of the EPG system is generally the centralized deployment. According to the centralized deployment, plural EPG servers are located at the operation center and in front of the plural EPG servers, payload equalizers are installed to form a cluster. A virtual service address is provided externally for all IPTV users to access the EPG servers located at the operation center.

In the centralized deployment of the EPG system according to the prior art, all the users access EPG servers located at the operation center via a metropolitan area network, which adds a ponderous burden to the bandwidth of the metropolitan area network. Besides, bandwidth restrictions on the egress of the operation center also hinder the whole system from providing service to a large number of users.

### Summary of the Invention

Embodiments of the present invention provide an electronic program guide service system and its establishing and operating method, wherein electronic program guide servers are deployed in a distributed manner to reduce the data flow in the metropolitan area network and to improve system performance and efficiency.

An embodiment of the present invention provides an establishing method of an electronic program guide service system that includes plural electronic program guide servers and the method includes: arranging the plural electronic program guide servers of the system in different network areas respectively; grouping the plural electronic program guide servers according to their characteristics, and assigning a number to each group; and setting a scheduling policy according to users' attributes and characteristics of the electronic program guide server groups, and storing the set scheduling policy into a scheduling server.

An embodiment of the present invention provides an operating method of an electronic program guide service system and the method includes: receiving, by a scheduling server, a request for electronic program guide service from a user's terminal; on receiving the request for electronic program guide service, selecting, by the scheduling server, an electronic program guide server according to a scheduling policy to provide service for the users' terminal, and sends a scheduling notification to the users' terminal; receiving, by the users' terminal, the scheduling notification and, according to the scheduling notification, initiating a request for connection to the selected electronic program guide server and establishing interactive connection.

Furthermore, an embodiment of the present invention provides an electronic program guide service system which includes electronic program guide servers and users' terminal and the system further includes: a scheduling server having a scheduling policy stored thereon and adapted to schedule the electronic program guide servers according to the stored scheduling policy and/or payload equalizers, wherein the electronic program guide servers, the users' terminal and the scheduling server are interconnected via the metropolitan area network, and the scheduling server designates a corresponding electronic program guide server for users' terminal on receiving a request for electronic program guide service from the users' terminal.

Still furthermore, an embodiment of the present invention provides a scheduling server which includes: a storage unit, adapted to store a scheduling policy; and a scheduling unit, adapted to schedule electronic program guide servers according to the stored scheduling policy and designate a corresponding electronic program guide server for users' terminal on receiving a request for electronic program guide service from the users' terminal.

The present invention suggests a technical solution that deploys the electronic program guide servers in a distributed manner, groups the electronic program guide servers, has the group numbers to correspond to users' attribute-determining characteristic values, and sets a scheduling policy and stores the scheduling policy in the scheduling server, so that the flow between users' terminals and EPG servers bypasses the metropolitan area network, the bandwidth of which is therefore less affected.

With edge nodes serving as a bypass for the egress flow of the EPG system, service is free of bandwidth restriction, and the number of the users able to enjoy the service may therefore continuously expand.

### Brief Description of the Drawings

Figure 1 is a schematic diagram of an EPG system including a single scheduling server according to an embodiment of the present invention;

Figure 2 is a schematic diagram of an EPG system including plural scheduling servers according to an embodiment of the present invention;

Figure 3 is a schematic structural diagram of a scheduling server according to an embodiment of the present invention;

Figure 4 is a flow chart showing an establishing method of an EPG system according to an embodiment of the present invention;

Figure 5 is a flow chart showing an operating method of an EPG system according to an embodiment of the present invention.

### Detailed Description of the Embodiments

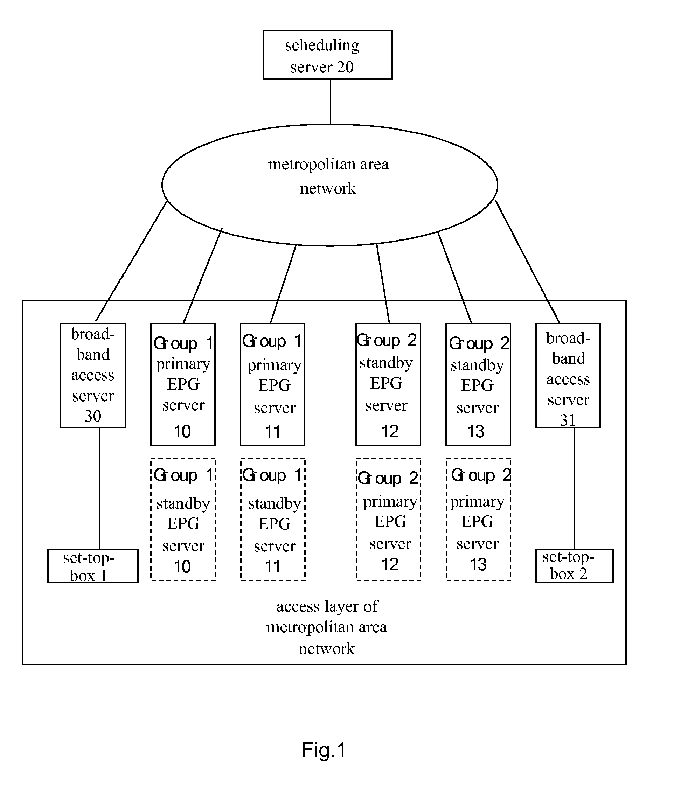

Below, detailed description will be given to the embodiments of the present invention with reference to the drawings. As illustrated in Figure 1, the EPG system includes a scheduling server 20, an EPG server 10, an EPG server 11, an EPG server 12, an EPG server 13, a broadband access server 30, a broadband access server 31, a set-top-box 1 and a set-top-box 2. The scheduling server 20 stores a scheduling policy used in EPG system for selecting EPG servers to provide service for users according to the scheduling policy, such as payload equalizer scheduling. The EPG servers offer an EPG service. In other words, the scheduling policy is stored in the scheduling server which performs payload equalizer scheduling, and the EPG service is offered by the EPG servers. The EPG server 10, the EPG server 11, the EPG server 12 and the EPG server 13 are connected to the scheduling server 20 via a metropolitan area network.

The scheduling server 20 is located at the IPTV operation center on the metropolitan area network, while the EPG server 10, the EPG server 11, the EPG server 12 and the EPG server 13 are at the access layer on the edge of the metropolitan area network. The EPG server 10 and the EPG server 11 are attached to the network location in the same layer as the broadband access server 30, and the EPG server 12 and the EPG server 13 are attached to the network location in the same layer as the broadband access server 31.

The set-top-box 1 is connected to the broadband access server 30 and the set-top-box 2 to the broadband access server 31. Both the set-top-box 1 and the set-top-box 2 send request for scheduling to the scheduling server 20. The scheduling server 20 accordingly sends a scheduling notification to the set-top-box 1 and the set-top-box 2. The set-top-box 1 and the set-top-box 2 accordingly send a request for connection to the EPG server 10, the EPG server 11, the EPG server 12 and the EPG server 13.

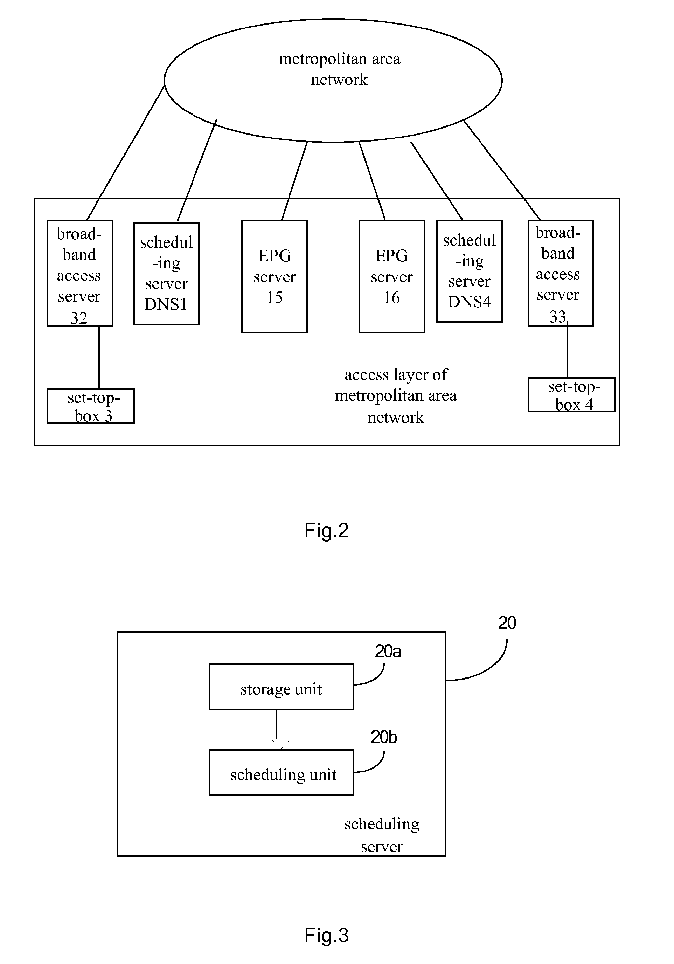

The EPG system according to an embodiment of the present invention, as illustrated in Figure 2, includes a scheduling server DNS1, a scheduling server DNS4, an EPG server 15, an EPG server 16, a broadband access server 32, a broadband access server 33, a set-top-box 3 and a set-top-box 4. The scheduling server DNS1 and the scheduling server DNS4 are both Domain Name Servers (DNS), to which the EPG server 15 and the EPG server 16 are connected via a metropolitan area network. The scheduling server DNS1, the scheduling server DNS4, the EPG server 15 and the EPG server 16 are located at the access layer on the edge of the metropolitan area network. The EPG server 15 is installed at the network location in the same layer, such as the access layer of the metropolitan area network, as the broadband access server 32, and the EPG server 16 installed at the network location in the same layer, such as the access layer of the metropolitan area network, as the broadband access server 33. The set-top-box 3 is connected to the broadband access server 32 and the set-top-box 4 is connected to the broadband access server 33. The set-top-box 3 sends a request for scheduling to the scheduling server DNS1 and the set-top-box 4 sends a request for scheduling to the scheduling server DNS4. Accordingly, the scheduling server DNS1 then sends a scheduling notification to the set-top-box 3 and the scheduling server DNS4 then sends a scheduling notification to the set-top-box 4. After that, the set-top-box 3 sends a request for connection to the EPG server 15 and the set-top-box 4 sends a request for connection to the EPG server 16.

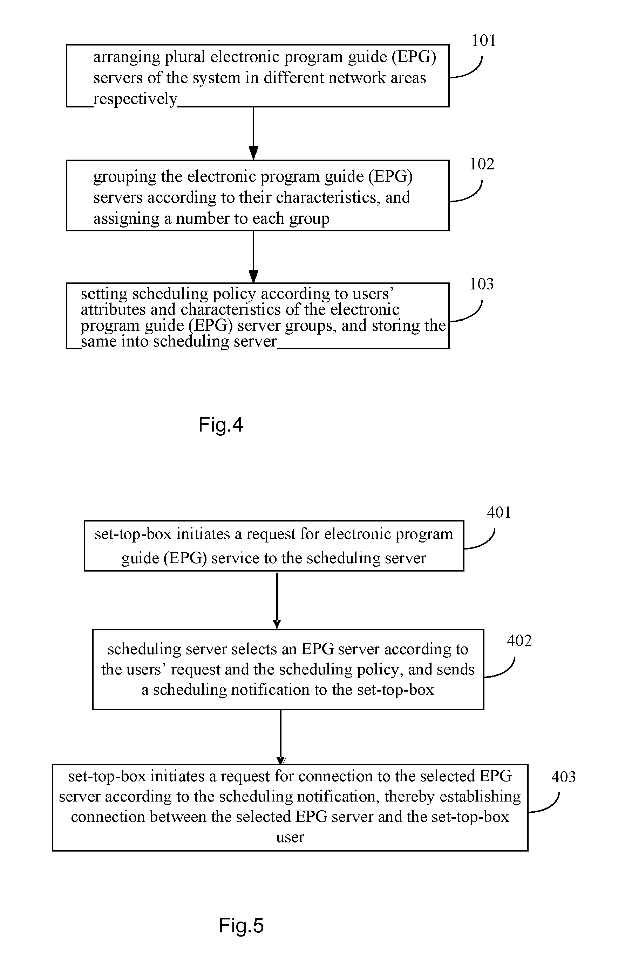

Referring to Figure 1 and Figure 4, an embodiment of the present invention provides a method for establishing an EPG system, including such blocks as:

Block 101: Respectively arrange plural EPG servers 10, 11, 12 and 13 of the system in different network areas;

Block 102: Group the EPG servers according to their characteristics, and assign a number to each group; specifically, the scheduling server 20 groups the EPG server 10 and the EPG server 11 together in one group, and the EPG server 12 and the EPG server 13 in another group.

The scheduling server 20 numbers the EPG server 10 and the EPG server 11 as EPG Server Group 1 and the EPG server 12 and the EPG server 13 as EPG Server Group 2.

Block 103: Set a scheduling policy according to users' attributes and characteristics of the EPG server groups, and store the scheduling policy into the scheduling server.

The scheduling server 20 sets Scheduling Policy 1 as: providing, for users whose attribute-determining characteristic values indicate VIP users, Server Group 1 as a primary group and Server Group 2 as a standby group. The scheduling server 20 also sets Scheduling Policy 2 as: providing, for users whose attribute-determining characteristic values indicate ordinary users, Server Group 2 as a primary group and Server Group 1 as a standby group.

An embodiment of the present invention provides a scheduling server as illustrated in Figure 3, which includes: a storage unit 20a for storing the scheduling policy; a scheduling unit 20b for scheduling the EPG servers according to the stored scheduling policy, and designating corresponding EPG servers for users' terminals on receiving the request for EPG service from the users' terminals.

Next, described below is an operating method of the EPG system.

The set-top-box first initiates a request for scheduling to the scheduling server. The scheduling server then designates an EPG server according to the request for scheduling and the scheduling policy, and sends a scheduling notification to the set-top-box so that the set-top-box initiates a request for connection to the designated EPG server according to the scheduling notification, thereby establishing an interactive connection between the designated EPG server and the user of the set-top-box.

Referring to Figure 1, an embodiment of the present invention provides an operating method of EPG system, including such blocks as:

Block 201: The set-top-box 1 initiates a request for scheduling to the scheduling server 20 via the broadband access server 30.

Block 202: The scheduling server 20, on receiving the request for scheduling from the set-top-box 1, performs user authentication, and prevents the set-top-box 1 from logging in and ends the processing flow if the authentication fails. The manner of passing the authentication is adopted in this embodiment and the scheduling server acquires, by use of a request for authentication, the attribute of the user corresponding to the set-top-box 1, with the attribute being a VIP user.

Block 203: The scheduling policy 1 is determined and selected according to the stored attribute of the user of the set-top-box 1, which is a VIP user, so as to be aware then that the primary server group is Group 1 and the standby server group is Group 2, and the scheduling server 20 inquires the health of the EPG servers and designates the EPG server 10 whose IP address is 218.246.1.10 according to the inquiring result of the health of the EPG servers.

Block 204: The scheduling server 20 sends to the set-top-box 1 a scheduling notification which includes: information that the set-top-box 1 is to log in to the designated EPG server 10 whose IP address is 218.246.1.10, and flag which is specified by the scheduling server 20 and indicates that the set-top-box 1 has passed logon authentication.

Block 205: set-top-box 1, on receiving the scheduling notification, initiates a request for connection to the EPG server 10 with the request for connection carrying the flag which is issued by the scheduling server 20 and indicates that logon authentication has passed, and the EPG server 10, on receiving the request from set-top-box 1, establishes an interactive connection with set-top-box 1.

An embodiment of the present invention further provides another method of establishing an EPG system, including such blocks as:

Block 301: The scheduling server 20 groups the EPG server 10 and the EPG server 11 together as one group, and the EPG server 12 and the EPG server 13 as another group.

Block 302: The scheduling server 20 numbers the EPG server 10 and the EPG server 11 as Server Group 1 and the EPG server 12 and the EPG server 13 Server Group 2.

Block 303: The scheduling server 20 sets Scheduling Policy 1 as: providing, for users whose attribute-determining characteristic values are the IP addresses within the segment of 10.168.1.1-10.168.1.254, Server Group 2 as a primary group and Server Group 1 as a standby group, and the scheduling server 20 sets Scheduling Policy 2 as: providing, for users whose attribute-determining characteristic values are the IP addresses within the segment of 10.168.2.1-10.168.2.254, Server Group 2 as a primary group and Server Group 1 as a standby group.

Referring to Figure 5, an embodiment of the present invention provides an operating method of the EPG system, including such blocks as:

Block 401: The set-top-box initiates a request for EPG service to the scheduling server;

Specifically, the set-top-box 2 initiates a request for scheduling to the scheduling server 20 via the broadband access server 31.

Block 402: The scheduling server selects an EPG server for the set-top-box according to the users' request and the scheduling policy, and sends a scheduling notification to the set-top-box;

The scheduling server 20, instead of performing user authentication immediately after receiving the request for scheduling, redirects so as to have the user authentication done by the designated EPG server. The scheduling server 20 acquires, by use of the request for scheduling, the attribute of the user corresponding to the set-top-box 2, with the attribute being IP address of 10.168.1.10.

Since the stored attribute of the user of the set-top-box 2 is IP address 10.168.2.10, Scheduling Policy 2 is accordingly selected so as to be aware then that the primary server group is Group 2 and the standby server group is Group 1, and the scheduling server inquires the health of the EPG servers and designates the EPG server 13 whose IP address is 218.246.2.13 according to the inquiring result of the health of the EPG servers.

The scheduling server 20 sends to the set-top-box 2 a scheduling notification which includes: information that set-top-box 2 is to log in to the designated EPG server 13 whose IP address is 218.246.2.13, and designation that the EPG server 13 is to deal with the request for authentication.

Block 403: The set-top-box initiates a request for connection to the selected EPG server according to the scheduling notification, thereby establishing a connection between the selected EPG server and the user.

The set-top-box 2, on receiving the scheduling notification, initiates a request for connection to the EPG server 13. The EPG server 13, on receiving the request for connection from the set-top-box 2, performs authentication to the user, and prevents the set-top-box 2 from logging in and ends the processing flow if the authentication fails. The manner of passing the authentication is adopted in this embodiment so that an interactive connection between the EPG server 13 and the user of the set-top-box 2 is established.

In the specific embodiment below, the DNS server is adopted as the scheduling server, and all the set-top-boxes log in to the EPG servers by referring to a domain name. Regarding each group of EPG servers, there is provided a DNS server so that set-top-boxes at different locations use different DNS servers. Different DNS servers resolve the domain name of EPG server and obtain the IP address of EPG server on different edge nodes.

Referring to Figure 2, another embodiment of the present invention provides an operating method of an EPG system, including such blocks as:

Block 501: The set-top-box 3 initiates, via the broadband access server 32, a request for scheduling which includes www.EPG.com.cn, to the scheduling server DNS1.

Block 502: The scheduling server DNS1 receives the request for scheduling from the set-top-box 3, and the scheduling server DNS1, on receiving the request for scheduling, resolves www.EPG.com.cn, obtains the IP address 218.246.3.11 of the EPG server 15 and designates the EPG server 15 for the set-top-box 3.

Block 503: The scheduling server DNS1 sends to the set-top-box 3 a scheduling notification which includes: information that the set-top-box 3 is to log in to the EPG server 15 whose IP address is 218.246.3.11.

Block 504: The set-top-box 3 initiates a request for connection to the EPG server 15 and the EPG server 15, on receiving the request for connection from the set-top-box 3, performs authentication to the user, and prevents the set-top-box 3 from logging in and ends the processing flow if the authentication fails. The manner of passing the authentication is adopted in this embodiment so that an interactive connection between the EPG server 15 and the user of the set-top-box 3 is established.

The present invention provides in its yet another embodiment an operating method of an EPG system, including such blocks as:

Block 601: The set-top-box 4 initiates, via broadband access server 33, a request for scheduling which includes www.EPG.com.cn, to the scheduling server DNS4.

Block 602: The scheduling server DNS4 receives the request for scheduling from the set-top-box 4, and the scheduling server DNS4, on receiving the request for scheduling, resolves www.EPG.com.cn, obtains IP address 218.246.3.12 of the EPG server 16 and designate the EPG server 16 for the set-top-box 4.

Block 603: The scheduling server DNS4 sends to the set-top-box 4 a scheduling notification which includes: information that the set-top-box 4 is to log in to the EPG server 16 whose IP address is 218.246.3.12.

Block 604: The set-top-box 4 initiates a request for connection to the EPG server 16 and the EPG server 16, on receiving the request for connection from the set-top-box 4, performs authentication to the user, and prevents the set-top-box 4 from logging in on and ends the processing flow if the authentication fails. The manner of passing the authentication is adopted in this embodiment so that an interactive connection between the EPG server 16 and the user of the set-top-box 4 is established.

The present invention provides a technical solution that deploys the EPG servers in a distributed manner, groups the EPG servers, the group numbers of which are made to correspond to users' attribute-determining characteristic values, and sets a scheduling policy which is then stored in the scheduling server. Therefore, the flow between users' terminal and the EPG servers bypasses the metropolitan area network, the bandwidth of which is therefore less affected.

With edge nodes serving as a bypass for the egress flow of the EPG system, service is free of bandwidth restriction, and the number of users able to enjoy the service may therefore continuously expand.

Described above are merely embodiments, rather than restrictions, of the present invention. Any modifications, equivalent substitutes and improvements within the spirit and principle of the present invention fall within the scope of the present invention.

## Claims

1. An establishing method of an electronic program guide service system that comprises plural electronic program guide servers, comprising:
arranging the plural electronic program guide servers of the system in different network areas respectively;
grouping the plural electronic program guide servers according to their characteristics, and assigning a number to each group; and
setting a scheduling policy according to users' attributes and characteristics of the electronic program guide server groups, and storing the set scheduling policy into a scheduling server.

2. The method of claim 1, wherein the process of grouping the plural electronic program guide servers comprises:
grouping electronic program guide servers that have the same processing ability and/or the same service processing flow together to form an electronic program guide server group; and
the electronic program guide servers in the same group being backup devices of each other.

3. The method of claim 1, wherein the scheduling policy comprises at least one of the following policies:
predetermined corresponding relations between users and electronic program guide server groups;
a payload equalizing policy of the electronic program guide servers; and
a minimal routing cost policy between users and the electronic program guide servers.

4. The method of claim 1, wherein the users' attributes comprise at least one of the following: users' type, service level, and network area where the users are located.

5. An operating method of an electronic program guide service system, comprising:
receiving, by a scheduling server, a request for electronic program guide service from a user's terminal;
on receiving the request for electronic program guide service, selecting, by the scheduling server, an electronic program guide server according to a scheduling policy to provide service for the users' terminal, and sends a scheduling notification to the users' terminal;
receiving, by the users' terminal, the scheduling notification and, according to the scheduling notification, initiating a request for connection to the selected electronic program guide server and establishing interactive connection.

6. The method of claim 5, wherein the request for electronic program guide service comprises users' attributes.

7. The method of claim 5, wherein the scheduling policy comprises at least one of the following policies:
predetermined corresponding relations between users and electronic program guide server groups;
a payload equalizing policy of electronic program guide servers; and
a minimal routing cost policy between users and the electronic program guide servers.

8. The method of claim 4, wherein the scheduling server monitors payload status of the electronic program guide servers, and selects electronic program guide server according to the payload status of the electronic program guide server.

9. The method of claim 7, wherein the process that the scheduling server selects an electronic program guide server comprises:
selecting, by the scheduling server, the scheduling policy according to information on the users' attributes included in the request for scheduling ;
determining, by the scheduling server, a group number according to the selected scheduling policy;
designating, by the scheduling server, according to payload status of the electronic program guide servers, an electronic program guide server from a selected server group so as to provide service for the users' terminal; and
sending, by the scheduling server, the scheduling notification to the users' terminal with the scheduling notification comprising information on address of the designated electronic program guide server.

10. An electronic program guide service system, which comprises at least two electronic program guide servers, further comprising:
a scheduling server having a scheduling policy stored thereon and adapted to schedule the electronic program guide servers according to the stored scheduling policy and/or payload equalizers, wherein the scheduling server designates a corresponding electronic program guide server for users' terminal on receiving a request for electronic program guide service from the users' terminal.

11. The system of claim 10, wherein
the electronic program guide servers are grouped according to their characteristics with a number assigned to each group; and
the scheduling policy comprises corresponding relations set according to users' attributes and the characteristics of the electronic program guide server groups.

12. The system of claim 11, wherein
the electronic program guide servers in each group have the same processing ability and/or the same service processing flow, and the electronic program guide servers in the same group are backup devices of each other.

13. The system of claim 10, wherein the scheduling server is located at an operation center on a metropolitan area network or an access layer on the edge of the metropolitan area network; and the electronic program guide servers are located at the access layer on the edge of the metropolitan area network.

14. The system of claim 10, wherein the scheduling server is a domain name server located at the access layer on the edge of the metropolitan area network, and the electronic program guide servers are grouped by area with each group of electronic program guide servers connected to one domain name server.

15. A scheduling server, comprising:
a storage unit, adapted to store a scheduling policy; and
a scheduling unit, adapted to schedule electronic program guide servers according to the stored scheduling policy and designate a corresponding electronic program guide server for users' terminal on receiving a request for electronic program guide service from the users' terminal.

16. The scheduling server of claim 15, wherein the scheduling policy comprises at least one of the following policies:
predetermined corresponding relations between users and electronic program guide server groups;
a payload equalizing policy of electronic program guide servers; and
a minimal routing cost policy between users and the electronic program guide servers.
